# EUROPÄISCHE PATENTANMELDUNG

(11) **EP 2 995 485 A1**
(43) Veröffentlichungstag der Anmeldung: **16.03.2016**
(21) Anmeldenummer: 15176586.4
(22) Anmeldetag: 14.07.2015
(51) Int. Cl.: B60J 7/00, B60J 7/06, B60J 7/12

(54) **FALTSCHIEBEDACH FÜR KRAFTFAHRZEUGE**

(30) Priorität: 15.09.2014 DE 102014218447
(71) Anmelder: Magna Car Top Systems GmbH, 74321 Bietigheim-Bissingen (DE)
(72) Erfinder: CARENI, Claus, 74321 Bietigheim-Bissingen (DE); KLEIN, Berthold, 74343 Sachsenheim (DE); POSSLER, Berthold, 74343 Sachsenheim (DE); ZEHNDER, Frank, 71282 Hemmingen (DE)
(74) Vertreter: Völger, Silke Beatrix

(57) **Zusammenfassung**

Faltschiebedach (1) für Kraftfahrzeuge, zum zumindest teilweisen Öffnen und Schließen eines Fahrzeuginnenraums, umfassend, einen Verdeckbezug (3) und ein Dachflächenbauteil (2), wobei das Dachflächenbauteil (2) im vorderen Bereich des Faltschiebedachs (1) angeordnet ist, und wobei der Verdeckbezug an dem Dachflächenbauteil (2) angebunden ist, wobei beim Öffnen des Faltschiebedachs (1) das Dachflächenbauteil (2) in Fahrzeuglängsrichtung hinten weiter aufgestellt wird als vorne und eine Faltenbildung des Verdeckbezugs (3) beim nach hinten Schieben des Dachflächenbauteils (2) im Wesentlichen unter der Oberfläche (O) des Dachflächenbauteils (2) erfolgt.

## Beschreibung

Die vorliegende Erfindung betrifft ein Faltschiebedach für Kraftfahrzeuge, zum zumindest teilweisen Öffnen und Schließen eines Fahrzeuginnenraums, umfassend, einen Verdeckbezug und einem Dachflächenbauteil, wobei das Dachflächenbauteil im vorderen Bereich des Faltschiebedachs angeordnet ist und in seitlichen Führungsschienen längsverschieblich geführt ist, und wobei der Verdeckbezug an dem Dachflächenbauteil angebunden ist.

Ein derartiges Faltschiebedach ist beispielsweise aus der EP 0 774 371 A2 bekannt. Dieses als Faltschiebedach ausgeführte Fahrzeugdach ist zwischen einer Offenstellung und einer Schließstellung verstellbar und umfasst eine Vielzahl in Querrichtung sich erstreckende Spriegel sowie ein vorderes und ein hinteres Dachelement.
Ein derartiges Faltschiebedach umfasst auf jeder Fahrzeugseite eine Führungsschiene sowie einen Verdeckstoff, der mit Spriegeln verbunden ist und der mit Hilfe dieser Spriegel zwischen einer Offenstellung und einer Schließstellung verstellbar ist. Um diese Verstellbarkeit des Verdeckstoffs zu ermöglichen, umfassen die Spriegel mehrere Schiebespriegel, die mit ihren Enden an den genannten Führungsschienen verschiebbar gelagert sind. In der Schließstellung des Faltschiebedachs wird der Fahrzeuginnenraum durch die Dachelemente und den Verdeckstoff überspannt und abgedeckt.

Problematisch ist bei derartigen Faltschiebedächern die Unterbringung des Verdeckstoffs in der Offenstellung. Störend ist dabei vor allem der in der Offenstellung im hinteren Bereich der Führungsschiene verstaute in Falten liegende Verdeckstoff. Hierbei ist der in Falten gelegte zur Außenseite ragende Verdeckstoff nicht nur unter einem optischen Aspekt störend. Die Textilfalten im hinteren Dachbereich erzeugen insbesondere bei hohen Geschwindigkeiten einen hohen Anteil bei Aero-akustischen Geräuschemissionen. Nachteilig ist weiterhin, dass die Textilfalten bei hohen Geschwindigkeiten, aufgrund der hohen Windkräfte nicht, wie gewünscht, im hinteren Bereich des Kraftfahrzeugs ablegbar sind.

Des Weiteren sind sogenannte Kraftfahrzeuge mit Panorama Glasdächer bekannt, die flächige in Führungsschienen verschieblich gelagerte Glaselemente umfassen. Derartige Panorama Glasdächern sind bei hohen Windkräften zuverlässig in eine Offenstellung und eine Schließstellung bringbar. Nachteilig bei diesen Ausführungen ist, dass sich im Vergleich zu Faltschiebedächern nur ein relativ kleiner Bereich des Dachs öffnen lässt.

Die vorliegende Erfindung beschäftigt sich mit dem Problem, für ein Faltschiebedach der eingangs genannten Art eine verbesserte Ausführungsform anzugeben, die sich insbesondere dadurch auszeichnet, dass in der Offenstellung die aero-akustischen und aerodynamischen Effekte insbesondere bei hohen Geschwindigkeiten verbessert, und dass ein optisch ansprechender Gesamteindruck des Faltschiebedachs in der Offenstellung erreicht wird.

Diese Aufgabe wird durch die im Patentanspruch 1 angegebenen Merkmale gelöst.

Das Faltschiebedach für Kraftfahrzeuge, zum zumindest teilweisen Öffnen und Schließen eines Fahrzeuginnenraums, umfasst einen Verdeckbezug und ein Dachflächenbauteil, wobei der Verdeckbezug an dem Dachflächenbauteil angebunden ist. Das Dachflächenbauteil ist benachbart zu einem vorderen die A Säulen des Fahrzeugs verbindenden Querholm angeordnet und über eine geeignete Mechanik an dem Querholm verriegelbar festgelegt. Die Verriegelung des Dachflächenbauteils am Querholm wird dabei zunächst gelöst und das Dachflächenbauteil kann über in den Führungsschienen gelagerten Gleitelementen längs der Führungsschienen nach hinten in den Heckbereich verschoben werden. Der Verdeckbezug ist an Spriegeln angebunden, die Führungsspriegel und Faltspriegel umfassen. Die Führungsspriegel sind über Gleitelemente in den Führungsschienen verschiebbar gelagert. Die Faltspriegel liegen auf den Führungsschienen auf und sind höhenverstellbar ausgeführt. Unmittelbar auf das Dachflächenbauteil folgt in Fahrzeuglängsrichtung in Richtung auf den Heckbereich ein Führungsspriegel. Führungsspreigel und Faltspriegel wechseln sich in Fahrzeuglängsrichtung ab. Beim Verschieben des Dachflächenbauteils mittels der Gleitelemente wird dieses nach einem kurzen Verschiebeweg mittels einer geeigneten Hebekinematik in Vertikalrichtung zur Außenseite des Fahrzeugs hin angehoben. Die Kinematik ist dabei derart ausgestaltet, dass die zum vorderen Querholm weisende Querseite des Dachflächenbauteils mit einem kleineren Hub angehoben wird, als die zur Heckseite des Kraftfahrzeugs weisende Querseite des Dachflächenbauteils. Hierdurch wird eine angehobene Schrägstellung des Dachflächenbauteils erreicht. Beim Verschieben des Dachflächenbauteils wird der Verdeckbezug durch die oben genannte Anordnung und Anbindung an die Spriegel in Falten gelegt, wobei die Faltenbildung des Verdeckbezugs bei dem nach hinten Schieben des Dachflächenbauteils im Wesentlichen unter der zum Fahrzeuginnenraum weisenden Oberfläche des Dachflächenbauteils erfolgt. In der Offenstellung überdeckt demnach das Dachflächenbauteil den in Falten gelegten Verdeckbezug. Durch die Abdeckung des in Falten gelegten Verdeckbezugs in der Offenstellung werden die aero-akustischen und aerodynamischen Effekte verbessert. Des Weiteren wird das optische Erscheinungsbild in der Offenstellung verbessert, da der in Falten gelegte Verdeckbezug nicht mehr sichtbar ist. Ein weiterer Vorteil besteht darin, dass bei der Öffnungs- und Schließbewegung des Faltschiebedachs die Faltung des Verdeckbezugs aufgrund des angehobenen schräg gestellten Dachflächenbauteils im Windschatten erfolgt. Dadurch wird erreicht, dass bei fahrendem Fahrzeug der Fahrtwind nicht unter den Verdeckbezug gelangen kann, wodurch eine Beschädigung am sich öffnenden Fahrzeugdach auftreten könnte.

Unter Dachflächenbauteil wird jedes Dachteil verstanden, welches den Fahrzeuginnenraum zumindest in einem Teilbereich (in Fahrtrichtung gesehen) des Dachbereichs flächig überspannt und in seitlichen Führungsschienen längsverschieblich gelagert ist. Das Dachflächenbauteil ist weiterhin dadurch gekennzeichnet, dass es benachbart zu dem vorderen Querholm bzw. Windschutzscheibenrahmen angeordnet und gegen das Fahrzeug, vorzugsweise gegen den Windschutzscheibenrahmen, verriegelt bzw. entriegelbar gehalten ist. In einer bevorzugten Ausführungsform kann es die Dachkappe sein.

In einer Weiterbildung des Erfindungsgedankens kann das Dachflächenbauteil mit integriertem Glaselement ausgeführt sein. Alternativ hierzu kann das Dachflächenbauteil ein Glaselement sein. Als Glaselement kann jedes Element verstanden werden, das transparent ausgebildet ist, beispielsweise Plexiglas. In einer weiteren Ausführungsform ist das Glaselement nur teilweise lichtdurchlässig. Bei der Ausführung des Dachflächenbauteils mit integriertem Glaselement, als auch bei der Ausführung des Dachflächenbauteils als vollflächiges Glaselement kann bei geschlossenem Faltschiebedach Licht von oben in das Fahrzeuginnere treten, was zu einem allgemeinen Wohlbefinden der Fahrzeuginsassen beiträgt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

Es zeigen:
Fig. 1 eine Schnittansicht eines erfindungsgemäßen Faltschiebedachs in der Offenstellung,
Fig. 2 eine perspektivische Ansicht des geschlossenen Faltschiebedachs, wobei das Dachflächenbauteil vom Verdeckbezug vollständig überspannt ist,
Fig. 3 eine weitere perspektivische Ansicht des geschlossenen Faltschiebedachs, wobei in dem Dachflächenbauteil integriert ein Glaselement angeordnet ist und der Bereich des Glaselements vom Verdeckbezug nicht überspannt ist,
Fig. 4 ist eine weitere perspektivische Ansicht des geschlossenen Faltschiebedachs, wobei das Dachflächenbauteil als Glaselement ausgeführt ist und der Verdeckbezug angrenzend an das Glaselement angeordnet ist; und
Fig. 5 ist eine perspektivische Ansicht des geöffneten Faltschiebedachs gemäß Figur 1.

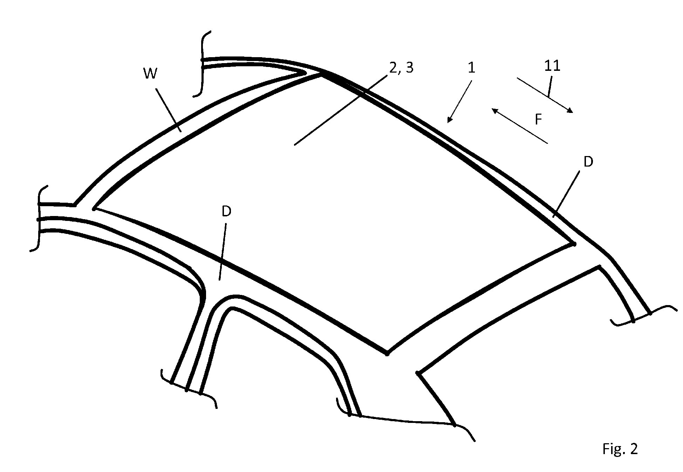

Die Figuren 2-4 zeigen in einer perspektivischen Ansicht einen Ausschnitts des Dachbereichs eines Kraftfahrzeugs, wobei ein Faltschiebedach 1 in unterschiedlichen Ausführungsformen in einer Schließposition gezeigt ist. Die Fahrzeuglängsrichtung bzw. Fahrtrichtung ist mit dem Pfeil F angezeigt. Die Vertikalrichtung ist mit dem Pfeil V angezeigt. Das verstellbare Faltschiebedach 1 erstreckt sich ausgehend von einem Windschutzscheibenrahmen W in einen Heckbereich H des Fahrzeugs. Der Windschutzscheibenrahmen W ist üblicherweise als Querverbindung (Querholm) der A-Säulen zur Anlage und Verriegelung des Faltschiebedachs in geschlossener Position ausgebildet. Der seitliche Dachbereich wird durch Dachseitenholme D gebildet, die ausgehend von der A-Säule sich bis zur C-Säule erstrecken. Zur verschieblichen Lagerung des Faltschiebedachs 1 weisen die Dachseitenholme D Führungsschienen auf. Die Führungsschienen sind zeichnerisch nicht dargestellt.

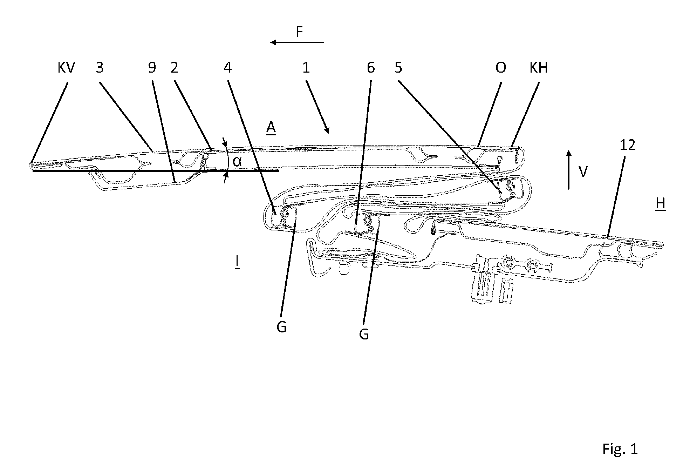

Entsprechend Fig. 1 weist ein Cabriolet-Fahrzeug, wobei hier nur das verstellbare Faltschiebedach 1 ohne Führungsschienen dargestellt ist, einen Fahrzeuginnenraum I auf. Die dem Fahrzeuginnenraum gegenüberliegende Seite des Faltschiebedachs 1 ist in der Figur 1 mit Außenseite A bezeichnet.

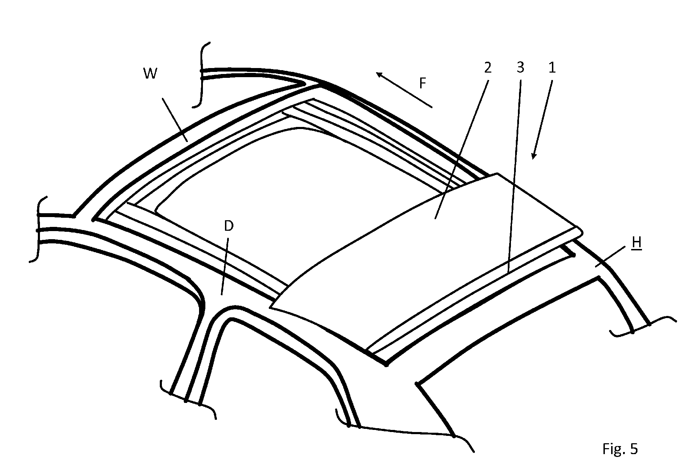

Das verstellbare Faltschiebedach 1 überspannt den Fahrzeuginnenraum I in der in den Fig. 2-4 gezeigten Schließstellung von oben. Ferner ist der Fahrzeuginnenraum I vorne durch eine Windschutzscheibe und seitlich durch Seitenfenster verschlossen. Die Figuren 1 und 5 zeigen die Offenstellung, in der das Faltschiebedach 1 in den rückwärtigen Dachbereich verschoben ist.

Das Faltschiebedach 1 umfasst ein Dachflächenbauteil 2, sowie eine Vielzahl von Spriegeln, wobei das Dachflächenbauteil 2 und die Spriegel Träger eines Verdeckbezugs 3 sind. Das Faltschiebedach 1 gemäß der Darstellung der Figur 1 ist in der Offenstellung dargestellt.

Der Verdeckbezug 3 überspannt in der gemäß den Figuren 1, 2 und 5 gezeigten Ausführungsform das Dachflächenbauteil 2 komplett und ist um eine vordere Querkante KV herumgeführt und festgelegt. Das Dachflächenbauteil 2 ist benachbart zu dem vorderen Querholm bzw. Windschutzscheibenrahmen W angeordnet und gegen das Fahrzeug, vorzugsweise gegen den Windschutzscheibenrahmen W, verriegelbar bzw. entriegelbar gehalten. Das Dachflächenbauteil 2 überspannt in der Schließstellung einen vorderen Teilbereich des Fahrzeuginnenraums I im Dachbereich flächig und ist in seitlichen Führungsschienen längsverschieblich gelagert. Die Lagerung des Dachflächenbauteils 2 erfolgt über in den Führungsschienen angeordneten Gleitelementen, die zeichnerisch nicht dargestellt sind. Des Weiteren ist das Dachflächenbauteil 2 mit einer Kinematik an die Führungsschienen gekoppelt, wodurch ein Anheben des Dachflächenelementes 2 beim Verschieben des Dachflächenelementes längs der Führungsschieben in die entgegengesetzte Richtung zur Fahrtrichtung bewirkt wird.

Das Faltschiebedach 1 umfasst außerdem mehrere Spriegel, die sich jeweils von der einen Führungsschiene zur anderen Führungsschiene in Querrichtung erstrecken und die zum Aufspannen des Verdeckstoffs 3 in der Schließstellung dienen. Hierzu ist der Verdeckstoff 3 an den Spriegeln angebunden. Mit Hilfe der Spriegel ist der Verdeckstoff 3 zwischen der Offenstellung und der Schließstellung verstellbar. Die dargestellte Ausführungsform umfasst zwei Führungsspriegel 4, 6 und einen Faltspriegel 5. Die Führungsspriegel 4, 6 sind jeweils mit ihren Enden an der jeweiligen Führungsschiene über Gleitelemente G verschiebbar gelagert. Die Faltspriegel 5 liegen auf den Führungsschienen auf. Unmittelbar auf das Dachflächenbauteil 2 folgt in Fahrzeuglängsrichtung F in Richtung auf den Heckbereich ein Führungsspriegel 4. Führungsspriegel und Faltspriegel wechseln sich in Fahrzeuglängsrichtung ab Bei Verwendung mehrerer Spriegel erfolgt eine Anordnung, dass jeweils ein Führungsspriegel mit einem Faltspriegel verbunden ist. Die Anbindung erfolgt über Blattfedern. Diese ist zeichnerisch nicht dargestellt. Bei einer ungeraden Anzahl von Spriegeln sind immer ein Führungsspriegel mehr als ein Faltspriegel angeordnet. Der zum Dachflächenelement 2 benachbart angeordneter Führungsspriegel 4 ist mit einem davon benachbart angeordneten Faltspriegel 5 durch Blattfedern miteinander verbunden. Durch diese Anbindung mittels Blattfedern wird der auf den Führungsschienen aufliegende Faltspriegel 5 mit einer nach oben gerichteten Federkraft beaufschlagt. Weitere benachbart angeordete Spriegel sind ebenso paarweise über eine Blattfeder miteinander verbunden. In der Schließstellung des Faltschiebedachs 1 liegen die Faltspriegel 5 aufgrund des darüberliegenden gespannten Verdeckstoffes 3 auf den den Führungsschienen auf. Es ist selbstverständlich, dass die Anzahl der Spriegel variieren kann.
Vorzugsweise ist im hinteren Bereich des Faltschiebedachs 1 ein hinters Dachteil 12 angeordnet. Dieses ist karosseriefest gehalten, wobei an dem hinteren Dachteil das hintere Ende des Verdeckbezugs 3 befestigt ist.

Beim Verschieben des Dachflächenbauteils 2 mittels der Gleitelemente wird dieses nach einem kurzen Verschiebeweg (beispielsweise 15 cm) in Richtung des Pfeils 11 mittels einer geeigneten Hebekinematik in Vertikalrichtung V zur Außenseite des Fahrzeugs hin angehoben. Die Kinematik ist dabei derart ausgestaltet, dass die zum vorderen Querholm W weisende Querkante (KV) des Dachflächenbauteils 2 mit einem kleineren Hub angehoben wird, als die zur Heckseite des Kraftfahrzeugs weisende Querkante (KH) des Dachflächenbauteils 2. Hierdurch wird eine angehobene Schrägstellung des Dachflächenbauteils 2 erreicht. Die Schrägstellung ist in der Figur 1 durch den Winkel Alpha angezeigt. An dieser Stelle wird noch angemerkt, dass in der Figur 1 die karosserieseitigen Teile wie Seitenholme, Führungsschienen, Windschutzscheibenrahmen etc. nicht gezeigt sind. Wird das Dachflächenbauteil entsprechend angehoben und nach hinten verschoben, bevorzugt motorisch, beginnt sich der Verdeckbezug 3 unter dem Dachflächenbauteil 2 zu falten. Beim Verschieben lässt die Stoffspannung des Verdeckbezugs 3 nach und der Faltspriegel 5 wird durch die Federkraft der Blattfeder nach oben in eine angehobene Position gedrückt, während der Führungsspriegel in der Führungsschiene geführt längs verschoben wird.

Die Faltenbildung des Verdeckbezugs 3 erfolgt dabei im Wesentlichen unter dem Dachflächenbauteil 2 bzw. unter der Oberfläche O des Dachflächenbauteils 2. Dabei ist die hintere Kante KH des Dachflächenbauteils 2 während dem Öffnen des Faltschiebedachs 1 in Vertikalrichtung V höher angeordnet als die vordere Kante KV des Dachflächenbauteils 2. Diese Anordnung soll gewährleisten, dass während der Fahrt der Fahrtwind nach oben abgelenkt wird, sodass keine Luftströmung unter der Oberfläche O des Dachflächenbauteils 2 auftreten kann, wodurch die dabei vorherrschenden Fahrtwindkräfte keine Beschädigung am sich öffnenden Faltschiebedach 1 verursachen können.

Zweckmässig sind die Führungsschienen als stationäre Führungsschienen ausgestaltet. Sie verbleiben also beim Öffnen und Schliessen des Verdeckstoffs an Ort und Stelle und definieren bspw. einen seitlichen Dachrahmen. Alternativ ist es grundsätzlich ebenso möglich, die Führungsschienen als verstellbare Führungsschienen auszugestalten. In diesem Fall können die Führungsschienen bei geöffnetem Verdeckstoff von einer Aufstellposition in eine Ablegeposition verstellt werden, in der sich die Führungsschienen bspw. In einem Ablagebereich befinden.

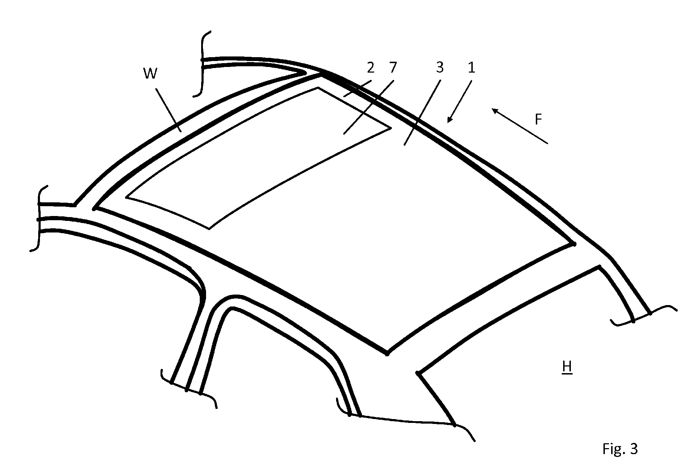

Fig. 3 zeigt ein Faltschiebedach 1, wobei das Dachflächenbauteil 2 ein integriertes Glaselement 7 aufweist. Das Dachflächenbauteil 2 ist im Bereich des integrierten Glaselements 7 nicht vom Verdeckbezug 3 überspannt.

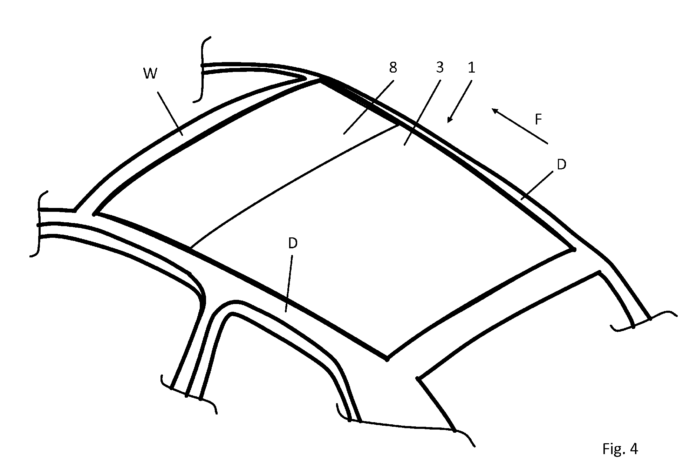

Fig. 4 zeigt die Ausführung des Dachflächenbauteils 2 als Galselement 8. Angrenzend an das Glaselement 8 ist an der zum Heckbereich weisenden Querkante KH der Verdeckbezug 3 angebunden. Das Glaselement 8 und der Verdeckbezug 3 sind miteinander dauerhaft verbunden, bevorzugt durch Kleben.

In Fig. 5 ist das Faltschiebedach 1 in seiner Offenstellung gemäß Fig. 2 dargestellt. Das Dachflächenbauteil 2 überdeckt im Wesentlichen den darunter gefalteten Verdeckbezug 3.

### Bezugszeichenliste

- 1: Faltschiebedach
- 2: Dachflächenbauteil
- 3: Verdeckbezug
- 4: Dachspriegel, Führungsspriegel
- 5: Dachspriegel, Faltspriegel
- 6: Dachspriegel, Führungsspriegel
- 7: Flächenspriegel mit integriertem Glaselement
- 8: Glaselement
- 9: Innenhimmel
- 12: hinteres Dachteil

- KV: vordere Kante
- KH: hintere Kante
- O: Oberfläche

## Patentansprüche

1. Faltschiebedach (1) für Kraftfahrzeuge, zum zumindest teilweisen Öffnen und Schließen eines Fahrzeuginnenraums, umfassend, einen Verdeckbezug (3) und einem Dachflächenbauteil (2), wobei das Dachflächenbauteil (2) im vorderen Bereich des Faltschiebedachs (1) angeordnet ist und in seitlichen Führungsschienen längsverschieblich geführt ist, und wobei der Verdeckbezug an dem Dachflächenbauteil (2) angebunden ist
**dadurch gekennzeichnet, dass** beim Öffnen des Faltschiebedachs (1) das Dachflächenbauteil (2) in Fahrzeuglängsrichtung hinten weiter aufgestellt wird als vorne und eine Faltenbildung des Verdeckbezugs (3) beim nach hinten Schieben des Dachflächenbauteils (2) im Wesentlichen unter der Oberfläche (O) des Dachflächenbauteils (2) erfolgt.

2. Faltschiebedach (1) für Kraftfahrzeuge nach Anspruch 1,
**dadurch gekennzeichnet, dass** das Dachflächenbauteil ein Flächenspriegel, ein Dachflächenbauteil (2) mit integriertem Glaselement (7) oder ein Glaselement (8) ist.

3. Faltschiebedach (1) für Kraftfahrzeuge nach zumindest einem der vorhergehenden Ansprüche,
**dadurch gekennzeichnet, dass** das Faltschiebedach (1) weiterhin eine Vielzahl von Spriegeln (4, 5, 6) umfasst, die quer zur Fahrzeuglängsrichtung angeordnet sind, und wobei der Verdeckbezug (3) an den Spriegeln (4, 5, 6) angebunden ist.

4. Faltschiebdach (1) für Kraftfahrzeuge nach Anspruch 3, wobei die Spriegel Führungsspriegel und Faltspriegel umfassen, wobei die Führungspriegel (4, 6) in den Führungsschienen längsverschieblich gelagert sind, und wobei die Faltspriegel (5) auf den Führungsschienen aufliegen.

5. Faltschiebedach (1) für Kraftfahrzeuge nach Anspruch 4, wobei die Führungsspriegel und die Faltspriegel in Längsrichtung alternierend angeordnet sind und jeweils paarweise über Federelemente, vorzugsweise Blattfedern derart verbunden sind, dass der Faltspriegel (5) von dem Federelement in eine angehobene Position kraftbeaufschlagt ist.
